(19) Europäisches Patentamt
European Patent Office
Office européen des brevets

(11) EP 3 425 613 A1

(12) **EUROPEAN PATENT APPLICATION**
published in accordance with Art. 153(4) EPC

(43) Date of publication:
**09.01.2019 Bulletin 2019/02**

(21) Application number: **16889666.0**

(22) Date of filing: **02.03.2016**

(51) Int Cl.:
***G09C 1/00*** *(2006.01)*

(86) International application number:
**PCT/JP2016/056322**

(87) International publication number:
**WO 2017/149686 (08.09.2017 Gazette 2017/36)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(71) Applicant: **Hitachi, Ltd.**
**Tokyo 100-8280 (JP)**

(72) Inventors:
- **YOSHINO Masayuki**
  **Tokyo 100-8280 (JP)**
- **SATO Hisayoshi**
  **Tokyo 100-8280 (JP)**
- **NAGANUMA Ken**
  **Tokyo 100-8280 (JP)**

(74) Representative: **MERH-IP Matias Erny Reichl Hoffmann**
**Patentanwälte PartG mbB**
**Paul-Heyse-Strasse 29**
**80336 München (DE)**

# (54) KEY GENERATION DEVICE, COMPUTER SYSTEM, AND STATISTICAL ENCRYPTION METHOD

(57) When data analysis is made in a server to which data is entrusted according to the technique disclosed in Patent Literature 1, individual cipher text is required to be decrypted in the server. That is, when basic statistics are computed in the server, a problem occurs that plain text of individual data is disclosed to the server side.

The key generator according to the present invention transmits the sum of random numbers which is a key used when individual plaintext data is encrypted to the server as a key for decrypting the sum of ciphertext data, and the server decrypts the sum of ciphertext data using the key.

FIG. 1

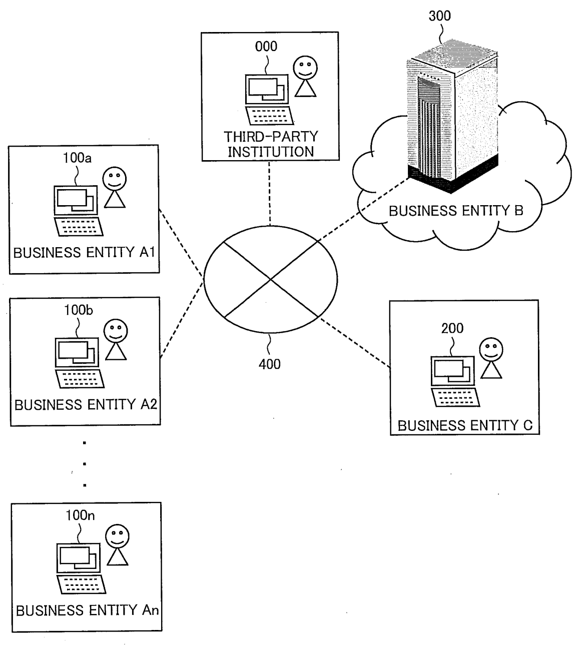


EP 3 425 613 A1

## Description

Technical Field

The present invention relates to statistical processing of encrypted data in computer environment.

Background Art

To enhance efficiency of costs for development and operational control of an information system, not only data processing utilizing an own information system but data processing by a server on a cloud provided by another organization are being generalized. The utilization of the cloud means that its own data is entrusted to the server managed by another organization. Therefore, the utilization of cryptographic technology is attracting attention to prevent information leakage.

For technique for preventing information leakage, entrusting the management of data to a server of another organization, an invention utilizing homomorphic encryption that enables operation is known. For example, in Patent Literature 1, a method of utilizing homomorphic encryption that enables computing addition and multiplication of cipher text and entrusting specific processing such as totaling to a server for data to be entrusted is disclosed.

Citation List

Patent Literature

Patent literature 1: Japanese Patent No. 5679018

Summary of Invention

Technical Problem

There is demand for requesting a server on a cloud to analyze data. Data analysis is work for searching similarity of data, a trend and the like, and basic statistics such as an average and variance are required for operation for data analysis. However, there occurs a problem that when individual data is encrypted so as to preclude data on a cloud from being decrypted for prevention of information leakage, it becomes difficult to compute basic statistics. This reason is that division of cipher text is difficult. Therefore, heretofore, to acquire basic statistics such as an average and variance requiring division, it has been required to decrypt cipher text and to acquire plain text.

For example, when data analysis is made in a server to which data is entrusted using the technique disclosed in Patent Literature 1, it is required that cipher text is returned from the server to a client, the client applies division to the decrypted cipher text after the client decrypts the cipher text, the client encrypts the divided cipher text again and the client transmits the cipher text to the server again. That is, there occurs a problem that when computation of the basic statistics in the server to which the data is entrusted is tried, processing becomes intricate and a heavier load is applied to computing resources.

Solution to Problem

To settle the abovementioned problem, in a key generator according to the present invention, the sum of random numbers which is a key used when individual plaintext data is encrypted to a server is transmitted to a server as a key for decrypting the sum of ciphertext data, and the sum of ciphertext data is decrypted using the key.

Advantageous Effects of Invention

Only a value of the sum of data is decrypted on the side of the server to be plain text. That is, it is enabled to compute basic statistics in the server without disclosing plain text of individual data to the server. Brief Description of Drawings

[Fig. 1] A schematic diagram showing an embodiment.

[Figs. 2A to 2D] Data handled by an encryption statistical processing system.

[Fig. 3] A schematic configuration of a key distribution PC.

[Fig. 4] A sequence diagram showing the whole process of the encryption statistical processing system.

[Fig. 5] A flowchart showing a parameter generation process for encryption statistical computation in the key distribution PC.

[Fig. 6] A flowchart showing an encryption key generation process in the key distribution PC.

[Fig. 7] Databases for managing aggregated value decryption keys and aggregated value encryption keys in the key distribution PC.

[Fig. 8] Flowcharts showing each cipher text generation process in a registration PC.

[Fig. 9] Flowcharts showing an encryption statistical computation process in a management server.

[Fig. 10] Flowcharts showing an encryption statistical computation process in a management server in a second embodiment.

[Fig. 11] Flowcharts showing each cipher text generation process in a registration PC in the second embodiment.

[Fig. 12] A flowchart showing an encryption statistical computation process in the management server in the second embodiment.

[Fig. 13] A flowchart showing an encryption statistical computation process in the management server in the second embodiment.

Description of Embodiments

Referring to the drawings, embodiments of the present invention will be described in detail below. Hereby, the present invention is not limited to the embodiments. In the embodiments, the same reference numeral is allocated to the same member in principle and repeated description is omitted. First, terminology used in the embodiments of the present invention will be defined.

(1) Divisor

A divisor denotes a value to divide in modulo operation (computation for acquiring a residue of division).

(2) mod t

"mod t" denotes modulo operation. Unless especially referred to, a result of modulo operation having t as a divisor is represented as integers [0, 1, 2, ---, t-1] in this embodiment and a value below 0 (zero) or a value equal to or larger than "t" shall be not used.

(3) Residue addition

Modulo operation is applied to an addition result of integers. For example, it is concluded that 4 + 5 mod 7 = 2.

(4) Residue subtraction

Modulo operation is applied to a subtraction result of integers. For example, it is concluded that 4 - 5 mod 7 = 6.

(5) Square residue

Modulo operation is applied to a square result of an integer. For example, it is concluded that $4^2$ mod 7 = 2.

(6) Basic statistics

In the present invention, basic statistics denote any of the sum, an average, variance and standard deviation which are representative statistics.

(7) Database

A database is one type of a management mode of data and in the present invention, may also be abbreviated as DB. In addition, when cipher text is stored as data, the database may also be abbreviated as encryption DB.

(8) Registration PC 100

Registration PC 100 denotes any or all of registration PCs 100a, 100b, ---, 100n.

(9) Aggregated value decryption key

An aggregated value decryption key is a generic name of a specific aggregated value decryption key for an average and an aggregated value decryption key for variance.

(10) Encryption key

An encryption key is a generic name of an encryption key for an average and an encryption key for variance.

(11) Plain text

Data to be encrypted is called plain text. After the data is encrypted, it is called cipher text.

(12) Plaintext space

Plaintext space denotes a set of values which plain text can take. For example, when plaintext space is equal to or larger than 0 and below t, plain text can take any of integers [0, 1, 2, ---, t-1].

(13) Variance

Variance is one of statistical indexes showing a variation of data distribution. Variance Var of plain text Mi can be computed on the basis of an average of the plain text Mi and an average of plain text $Mi^2$. It is generally concluded that Var(Mi) = Avg($Mi^2$) - $Avg(Mi)^2$.

(14) Standard deviation

Like variance, standard deviation is one of statistical indexes showing a variation of data distribution. A square root of variance is standard deviation Std. That is, it is generally concluded that $\mathrm{Std} = \sqrt{Var}$.

(15) Round function to integer

A round function to an integer is a function for returning a value of the closest integer to an input real number. When x is an input value to the round function to an integer and y is an output value (the output value is an integer), the round function is represented as "▪" (▪ is the input value). At this time, y = "x" and it is concluded that $|y - x| \leq 1/2$.

First Embodiment

Fig. 1 is a schematic diagram showing an embodiment of an encryption statistical processing system. As shown in Fig. 1, the statistical processing system is executed by a third-party institution, business entities A (1 to n), a business entity B and a business entity C. For hardware, key distribution PC 000 owned by the third-party institution, registration PCs 100a to 100n owned by the business entities A (1 to n), a management server 300 owned by the business entity B, and read PC 200 owned by the business entity C are respectively connected via a network 400.

This embodiment will be described as an example that this embodiment is applied to health care business. In the following, suppose that the third-party institution is a certification authority, the business entities A (1 to n) are medical checkup providers, the business entity B is a cloud service provider and the business entity C is a hospital.

The medical checkup provider entrusts its own information system to the management server 300 owned by the cloud service provider. In other words, the medical checkup provider entrusts medical checkup data acquired from a medical checkup examinee to the management server 300. The medical checkup data is individual information of the examinee and is required to be cautiously handled to prevent the data from being leaked to other people. The details of the medical checkup data will be described later referring to Fig. 2A.

Therefore, the medical checkup provider entrusts specified items in medical checkup data acquired from examinees and input to the registration PC 100a to the management server 300 of the cloud service provider after the medical checkup provider encrypts the specified items using an encryption key issued by the key distribution PC 000 of the certification authority. That is, no contents of the encrypted items in the individual medical checkup data are disclosed to the cloud service provider.

Since the hospital requires basic statistics data of disease based upon the medical checkup data, it requests the cloud service provider that stores the medical checkup data to transmit the basic statistics data. The details of the statistics statistics data will be described later referring to Fig. 2D.

The management server of the cloud service provider computes the sum of cipher text of medical checkup data stored inside, decrypts the sum using an aggregated value decryption key issued by the key distribution PC 000 of the certification authority, and the management server acquires plaintext data of the sum. The details of the plaintext data of the sum will be described later referring to Fig. 2C.

Since division can be applied to plain text, a value acquired by dividing plain text of the sum by the number of medical checkup data becomes an average value which is representative basic statistics data. Afterward, the average value is disclosed to the hospital side, but individual medical checkup data is not disclosed. That is, the hospital has acquired basic statistics data without disclosing individual medical checkup data owned by the medical checkup provider to other people. As described above, computation of the sum of cipher text can be processed by the related art.

Figs. 2A to 2D show concrete examples of data handled in this embodiment. The description referring to Fig. 1 will be complemented using these figures.

Fig. 2A shows medical checkup data acquired from examinees and registered in the registration PC 100 by the medical checkup provider, Fig. 2B shows the medical checkup data in which age and a hospitalization period (days) are encrypted for a data example stored in the management server 300, Fig. 2C shows plaintext data of a sum decrypted in the management server 300, and Fig. 2D shows basic statistics data computed in the management server 300, respectively.

Data in each line shown in Fig. 2A is called "individual medical checkup data". The key distribution PC 000 of the certification authority issues an encryption key for every specified range or every specified item, and the registration PC 100 of the medical checkup provider encrypts medical checkup data using the issued encryption key.

Fig. 2B shows that respective values stored in an "age" column and in a "hospitalization period (days)" column in the individual medical checkup data are encrypted.

Respective values stored in a "sum of ages" column and in a "sum of hospitalization periods" column in Fig. 2C are values of each sum in the "age" column and in the "hospitalization period (days)" column respectively shown in Fig. 2A in the specified range or items. In this example, items of "pneumonia" and "male" are specified. In this case, as shown in Fig. 2C, the sum of the age of male examinees having experience that they suffered from pneumonia and the sum of hospitalization periods when the examinees suffered from pneumonia are decrypted by an aggregated value decryption key issued by the key distribution PC 000 of the certification authority to be plain text.

Respective values stored in an "average age" column and in an "average hospitalization period (days)" column respectively shown in Fig. 2D are values acquired by dividing the value in the "sum of ages" column and the value in the "hospitalization period (days)" column respectively shown in Fig. 2C by the number of data. In this example, since the number of the data in each column in the specified range or items is 3, the value is one divided by 3. These numeric values are provided to the hospital, doctors and the like can read them using the read PC 200.

The abovementioned medical checkup data are one example. If necessary, plural cipher texts may also be combined. For example, another item managed in the form of plain text may also be encrypted using block cipher, searchable cipher, public key cryptography and the like.

Fig. 3 is a hardware block diagram showing the key distribution PC 000. As shown in Fig. 3, in the key distribution PC 000, a CPU 001, a memory 002, a storage 003, an input device 005, an output device 006, a reader/writer 007, and a communication device 008 are connected via an internal signal line 004. In addition, in the storage 003, predetermined programs are stored. The programs are loaded into the memory 002 and are executed by the CPU 001. The predetermined programs may also be stored in an external storage.

The registration PC 100, the read PC 200, and the management server 300 are also provided with the similar hardware configuration. The respective details are omitted because of repetition.

Fig. 4 is a sequence diagram showing the whole process of the encryption statistical processing system. S010 to S030 denote processing of the key distribution PC of the certification authority, S110 to S140 denote processing of the registration PC 100 of the medical checkup provider, S210 denotes processing of the read PC 200 of the hospital, and S310 to S330 denote processing of the management server 300 of the cloud service provider. Each step will be described below.

S110 is the processing of the registration PC for specifying a range or items of data to which statistical processing is to be applied. As described referring to Fig. 2A, items such as "medical record" and "sex" are specified for example. For an example of a case where a range of data is specified, it is conceivable that an area is specified like "Tokyo" and "Kanagawa" and a period is specified like Jan. 1st, 2015 to Dec. 31st, 2015.

S120 is the processing for the registration PC to request the key distribution PC to transmit an encryption key as to the range or the items specified in S110.

S010 is the processing for generating a parameter for encryption statistical computation on the basis of the request received in S120. The details will be described later referring to Fig. 5.

S020 is the processing for generating an encryption key D010 and an aggregated value decryption key D020 using the parameter for the encryption statistical computation generated in S010. The details will be described later referring to Fig. 6.

S030 is the processing for transmitting the encryption key D010 generated in S020 to the registration PC 100 and for transmitting the aggregated value decryption key D020 generated in S020 to the management server.

S130 is the processing for generating cipher text D110 using the encryption key D010 transmitted in S030. The details will be described later referring to Fig. 8.

S140 is the processing for transmitting the cipher text D110 generated in S130 to the management server.

S310 is the processing for transferring a state of the cipher text D110 transmitted in S140. The details will be described later referring to Fig. 9.

S320 is the processing for computing basic statistics D210 of the cipher text D110 the state of which is transferred in S310. The details will be described later referring to Figs. 9a, 9b.

S210 is the processing for the read PC to request to transmit the basic statistics D210 computed in S320.

S330 is the processing for receiving the request in S110 and transmitting the basic statistics D210 to the read PC.

As described above, the management server 300 can acquire plain text of basic statistics useful for analysis without acquiring plain text of individual data.

The abovementioned procedure is one example to the end, and sequence and contents of processing may also be changed if necessary. For example, when the registration PC and the read PC are located in the same entity (in this example, the hospital is supposed), the processing in S330 may also be executed without waiting for the request processing in S210. In this case, it is also conceivable that the registration PC 100 and the read PC 200 are the same terminal and in that case, S210 is also executed by the registration PC 100.

In addition, as the processing in S320 is processing for dividing the plain text of the sum of object data which is output of S310 by the number of the data, the processing is not necessarily required to be executed in the management server. For example, the output in S310 is transmitted to the read PC 200 and processing equivalent to S320 may also be executed in the read PC 200.

Further, basic statistics of medical checkup data collected from plural medical checkup providers (the registration PCs 100a to 100n) can also be computed.

Fig. 5 is a flowchart showing a parameter generation process for encryption statistical computation in the key distribution PC 000. The key distribution PC 000 generates a positive integer P and a positive integer t (S011). However, t shall be a divisor of n. For example, when n = 6, t is any of 1, 2, 3, 6 because t is a divisor of n. The key distribution PC 000 keeps the registration PC 100 and the management server 300 available by publishing or transmitting the generated positive integer P and the generated positive integer t.

Fig. 6 is a flowchart showing an encryption key generation process in the key distribution PC 000. The key distribution PC 000 generates "t" pieces of random numbers S1, S2, ---, St and "t" pieces of random numbers L1, L2, ---, Lt which are respectively equal to or larger than 0 and below P (S021). Next, a value acquired by adding residues modulo P of the random numbers S1, S2, ---, St shall be S and a value acquired by adding residues modulo P of the random numbers L1, L2, ---, Lt shall be L. That is, S = S1 + S2 +, ---, + St mod P and L = L1 + L2 +, ---, + Lt mod P (S022). Finally, the random numbers S1, S2, ---, St are output as an encryption key for an average, the random numbers L1, L2, ---, Lt are output as an encryption key for variance, S is output as an aggregated value decryption key for an average, and L is output as an aggregated value decryption key for variance (S023). That is, the aggregated value decryption key S for an average is a total modulo P of t pieces of random numbers S1, S2, ---, St and the aggregated value decryption key L for variance is a total modulo P of t pieces of random numbers L1, L2, ---, Lt.

Fig. 7 shows databases which the key distribution PC 000 uses in transmitting the aggregated value decryption key and the encryption key. Transmission destinations and transmission objects are managed in these databases called key management DB. For example, on a second line of the database shown in Fig. 7a, the PC 100a for registration is specified as a transmission destination, the encryption key S1 for an average and the encryption key for variance L1 are specified as a transmission object. In addition, in the database shown in Fig. 7b, the management server 300 is specified as a transmission destination, the aggregated value decryption key S for an average and the aggregated value decryption key L for variance are specified as a transmission object. The key distribution PC 000 transmits the encryption key and the aggregated value decryption key according to the transmission object and the transmission destination respectively specified in the key management DB. That is, in this example, since only the aggregated value decryption key is transmitted to the server, an individual encryption key is not disclosed to the server.

Fig. 8a in Fig. 8 is a flowchart showing a cipher text generation process in the registration PC 100. This cipher text is used for computing the sum and an average in the management server 300. The registration PC 100 applies the addition of residues modulo P of an encryption key Si for an average to plain text Mi to be encrypted and generates cipher text Ci. That is, it is concluded that Ci = Mi + Si mod P (S111a). At this time, plaintext space of the plain text Mi includes integers equal to or larger than 0 and below P/t. Next, the cipher text Ci is output (S112a).

Fig. 8b in Fig. 8 is a flowchart showing a cipher text generation process in the registration PC 100. This cipher text is used for computing variance and standard deviation in the management server 300. The registration PC 100 computes $Mi^2$ mod P which is a square residue modulo P of Mi on the basis of the plain text Mi to be encrypted, adds respective residues of the computed value and an encryption key Li for variance, and the registration PC generates cipher text Di. That is, it is concluded that Di = $Mi^2$ + Li mod P (S111b). At this time, plaintext space of plain text $Mi^2$ includes integers equal to or larger than 0 and below P/t. Next, the cipher text Di is output (S112b).

Fig. 9a in Fig. 9 is a flowchart showing a process when the management server 300 transfers an encrypted state of t pieces of cipher texts Ci to zero.

The management server 300 adds residues modulo P of t pieces of cipher texts Ci, subtracts a residue of S from the added value, and generates intermediate data SUM in which an encrypted state is released. That is, it is concluded that Sum = (C1 + C2 +, ---, Ct) - S mod P (S211a). In this case, since plaintext space of the plain text Mi includes integers equal to or larger than 0 and below P/t, Sum is equal to the sum of t pieces of plain texts Mi. That is, it is concluded that Sum = M1 + M2 +, ---, + Mt. That is, the expression means that the management server 300 can decrypt only a value of the sum of object data using the aggregated value decryption key S for an average.

Fig. 9b in Fig. 9 is a flowchart showing a process when the management server 300 computes an average value. It has already been described that the intermediate data SUM is equal to the sum of t pieces of plain texts Mi. An average Avg can be created by dividing the intermediate data SUM by t. That is, it is concluded that Avg = SUM/t (S221a). Next, the intermediate data SUM is output as the sum and the Avg is output as an average (S222a). As described referring to Fig. 3, since this processing is general statistical processing of dividing the number of data by t, the processing is not necessarily executed in the management server 300.

Fig. 10a in Fig. 10 is a flowchart showing a process for transferring an encrypted state when the management server 300 computes variance or standard deviation.

The management server 300 adds residues modulo P of t pieces of cipher texts Di, subtracts a residue of L from the added value, and the management server generates intermediate data tmp in which an encrypted state is released. That is, it is concluded that tmp = (D1 + D2, - --, + Dt) - L mod P (S211b). In this case, since plaintext space of the plain text $Mi^2$ includes integers equal to or larger than 0 and below P/t, tmp is equal to the sum of t pieces of plain texts $Mi^2$. That is, it is concluded that tmp = $M1^2$ + $M2^2$ +, ---, + $Mt^2$. That is, the management server 300 can decrypt only a value of the sum of object data using the aggregated value decryption key L for variance.

Fig. 10b in Fig. 10 is a flowchart showing a process when the management server 300 computes variance and standard deviation. It has already been described that the intermediate data tmp is equal to the sum of t pieces of plain texts $Mi^2$. Variance Var can be created by dividing the intermediate data SUM by t and further subtracting $Avg^2$. That is, it is concluded that Var = tmp/t - $Avg^2$ (S221b). Next, a square root of the Var is computed to acquire standard deviation Std (S222b). Finally, the VAR is output as variance and the Std is output as standard deviation (S223b). Since this processing is general statistical processing, it is not necessarily executed in the management server 300.

By the abovementioned processing, the management server 300 can acquire the sum SUM, the average Avg, the variance Var and the standard deviation Std which are respectively basic statistics of the plain text Mi without acquiring values of the plain texts Mi, $Mi^2$ from the cipher text Ci and the cipher text Di respectively received from the registration server, without acquiring an encryption key of individual data, and further without intricate exchanges with totaling PC 200.

The present invention is not limited to the abovementioned embodiment and variations are possible in a scope of its purport. For example, statistical computation is not limited to an average and variance and a statistic except them may also be computed. In addition, a value of data is not limited to an integer and may also be a real number.

Second Embodiment

In a second embodiment, as in the first embodiment, a method that a management server 300 can acquire only basic statistics from received individual cipher text in the form of plain text will be described. This embodiment is based upon a problem called LWE (Learning with Errors) and difficult from a viewpoint of a calculation amount in encryption.

A schematic diagram showing a system in the second embodiment is similar to that in the first embodiment. In addition, a configuration of key distribution PC 000, one or more registration PCs 100a to 100n, totaling PC 200 and the management server 300 is also similar to that of the first embodiment. Further, data transmission/reception and a process flow of a program in the key distribution PC 000, the registration PCs 100a to 100n, the management server 300, and the totaling PC 200 are also similar to those of the first embodiment.

Next, the difference in a process flow for generating a parameter for encryption statistical computation (S010) in the key distribution PC 000 from the first embodiment will be described.

The key distribution PC 000 generates a positive integer P, a positive integer N, a positive integer t and a positive integer m. However, t shall be a divisor of n. In addition, the key distribution PC 000 generates an N-dimensional vector A having random numbers equal to or larger than 0 and below P as an element (S011).

Next, the difference in a process flow of encryption key generation in the key distribution PC 000 (S020) from the first embodiment will be described.

The key distribution PC 000 generates N-dimensional vectors S1, S2, ---, St and L1, L2, ---, Lt respectively having random numbers equal to or larger than 0 and below P as an element (S021). Next, a value acquired by adding residues modulo P of the random numbers S1, S2, ---, St shall be S and a value acquired by adding residues modulo P of the random numbers L1, L2, --- Lt shall be L. That is, S = S1 + S2 +, ---, + St mod P, and L = L1 + L2 +, ---, + Lt mod P (S022). Finally, the random numbers S1, S2, -- -, St are output as an encryption key for an average, the random numbers L1, L2, -- -, Lt are output as an encryption key for variance, S is output as an aggregated value decryption key for an average, and L is output as an aggregated value decryption key for variance (S023).

A database which the key distribution PC 000 uses in transmitting the aggregated value decryption key and the encryption key is similar to that in the first embodiment.

Fig. 11a in Fig. 11 is a flowchart showing a process when the registration PC 100 in the second embodiment generates cipher text Ci. This cipher text is used for computing the sum and an average in the management server 300.

The registration PC 100 computes an inner product <A, Si> of the N-dimensional vector A and an n-dimensional vector Si modulo P. Further, the registration PC 100 creates random numbers Ei that meet |Ei| < P/(2mt). Finally, the registration PC 100 adds respective residues modulo P of the inner product <A, Si>, the random numbers Ei, and plain text Mi multiplied by P/m so as to acquire cipher text Ci. That is, it is concluded that Ci = (Mi)P/m + <A, Si> + Ei mod P (S111a). At this time, plaintext space of the plain text Mi includes integers equal to or larger than 0 and below m/t. Next, the cipher text Ci is output (S112a).

Fig. 11b in Fig. 11 is a flowchart showing a process for the registration PC 100 to generate cipher text Di in the second embodiment. This cipher text is used for computing variance and standard deviation in the management server 300. The registration PC 100 computes an inner product <A, Li> of the N-dimensional vector A and an n-dimensional vector Li modulo P. Further, the registration PC 100 creates random numbers Fi that meet |Fi| < P/(2mt). Finally, the registration PC adds respective residues modulo P of the inner product <A, Li> and the random numbers Fi, and a square residue $Mi^2$ of the plain text Mi multiplied by P/m so as to acquire cipher text Di. That is, it is concluded that Di = $Mi^2$ m/t + <A, Li> + Fi mod P (S111b). At this time, plaintext space of the plain text $Mi^2$ includes integers equal to or larger than 0 and below m/t. Next, the cipher text Di is output (S112b).

Fig. 12 is a flowchart showing a process for transferring an encrypted state of cipher text when the management server 300 computes plain text in the second embodiment. The management server 300 computes an inner product <A, S> of the N-dimensional vector A and an n-dimensional vector S modulo P. The management server 300 adds residues modulo P of t pieces of cipher texts Ci, subtracts a residue of the inner product <A, S>, and the management server generates intermediate data TMP acquired by releasing an encrypted state. That is, it is concluded that TMP = (C1 + C2 +, ---, + Ct) - <A, S> mod P (S211a). In this case, a real number acquired by multiplying the TMP by m/P is input to a round function to an integer and an output value SUM is acquired (S212a). It is concluded that "m/P(TMP)" = "(M1 + M 2+,---,+ Mt) + m/P(E1 + E2+,-,+ Et)" = M1 + M2 +,--- + Mt.

|t/m(E1 + E2 +,---,+ Et)| < 1/2 on the basis of |Ei| < P/2mt and the sum of the random numbers Ei is nullified by the round function to an integer. Accordingly, SUM is a total value of plain texts Mi.

A process flow when the management server 300 computes an average value is similar to that in the first embodiment.

Fig. 13 is a flowchart showing a process for transferring an encrypted state of cipher text when the management server 300 computes plain text in the second embodiment. The management server 300 computes an inner product <A, L> of the N-dimensional vector A and an n-dimensional vector L modulo P. The management server 300 adds residues modulo P of t pieces of cipher texts Di, subtracts a residue of the inner product <A, L> from the added value, and the management server generates intermediate data TMP acquired by releasing an encrypted state. That is, it is concluded that TMP = (D1 + D2 +,--, + Dt) - <A, L> mod P (S211a). In this case, a real number acquired by multiplying the TMP by m/P is input to a round function to an integer and an output value tmp is acquired (S212a). It is concluded that "m/P(TMP)" = "($M1^2 + M2^2$ +,---,$Mt^2$) + m/P(F1 + F2+,---,Ft)" = $M1^2 + M2^2$ +,-,+ $Mt^2$. |t/m(F1 + F2+, ---,+ Ft)| < 1/2 on the basis of |Fi| < P/2mt and the sum of random numbers Fi is nullified by the round function to an integer. Accordingly, tmp is a total value of the plain texts $Mi^2$.

A process flow when the management server 300 computes variance or standard deviation is similar to that in the first embodiment.

Owing to the abovementioned processes, the management server 300 can acquire the sum SUM, the average Avg, the variance Var, and the standard deviation Std which are respectively the basic statistics of the plain text Mi without acquiring values of each plain text Mi, $Mi^2$ from the cipher text Ci and the cipher text Di respectively received from the registration server and without intricate exchanges with the totaling PC 200.

In the present invention, as in the first embodiment, variations are possible in a scope of its purport. For example, in generation random numbers, for distribution of the random numbers, specific distribution such as Gaussian distribution and uniform distribution may also be used.

In the second embodiment, the management server 300 acquires basic statistics of the plain text Mi as plain text. However, basic statistics are computed in an encrypted state, and the basic statistics may also be concealed from the management server 300. For example, the key distribution PC 000 transmits a decryption key to the totaling PC 200 beforehand and the totaling PC 200 which receives encrypted basic statistics from the management server 300 may also decrypt them. In addition, the management server 300 may also be adjusted to partially disclose, such as not disclosing the sum to the totaling PC 200 but disclosing an average, by performing specific processing.

For example, to conceal a denominator t used for average computation, the management server 300 computes numbers which meet $1/t \approx r/R$, transmits the sum of cipher texts multiplied by r and R to the totaling PC 200, divides the sum of the acquired plain texts multiplied by r by R after the management server decrypts the cipher texts multiplied by r in the totaling PC 200, and computes an average value. At this time, since r is unidentifiable for the totaling PC 200, the totaling PC cannot acquire the sum of original plain texts from the sum of averages multiplied by r. In the meantime, the totaling PC can acquire the average having the denominator t by dividing by R.

For example, the management server 300 changes a value of a corresponding divisor from P to P/t and may also transmit cipher text converted for the value P/t of a new divisor to the totaling PC. At this time, the totaling PC decrypts the cipher texts using the divisor P/t and can acquire an average divided by t.

List of Reference Signs

000: Key distribution PC 100, 100a, 100b, 100n: Registration PC 200: Totaling PC 300: Management server 400: Network 001: CPU (Central Processing Unit) 002: Memory 003: Storage 004: Internal communication line 005: Input device 006: Output device 007: Reader/Writer 008: Communication device

## Claims

**1.** A key generator,
wherein a plurality of encryption keys as pseudo-random numbers are generated,
an aggregated value decryption key as the sum of the plurality of generated pseudo-random numbers is generated, and
the plurality of encryption keys and the aggregated value decryption key are transmitted to an external device.

**2.** A computer system provided with the key generator according to Claim 1 and a management server,
wherein the key generator transmits the plurality of encryption keys to a client terminal and transmits the aggregated value decryption key to the management server, and
the management server receives a plurality of data encrypted using the plurality of encryption keys from the client terminal, computes the sum of the plurality of encrypted data, decrypts a value of the sum using the aggregated value decryption key, and acquires a value of plain text.

**3.** A computer system provided with the key generator according to Claim 1 and a client terminal,
wherein the key generator transmits the plurality of encryption keys and the aggregated value decryption key to the client terminal, and
the client terminal encrypts a plurality of data using the plurality of received encryption keys, transmits the plurality of encrypted data to a management server, receives a value of the sum of the plurality of encrypted data from the management server, decrypts the received value of the sum using the aggregated value decryption key, and acquires a value of plain text.

**4.** The computer system according to Claim 2, wherein the management server divides the value of plain text by the number of data and acquires an average value of the plurality of data.

**5.** The computer system according to Claim 3, wherein the client terminal divides the value of plain text by the number of data and acquires an average value of the plurality of data.

**6.** An encryption statistical method, wherein a first CPU generates a plurality of encryption keys as pseudo-random numbers and generates an aggregated value decryption key as the sum of the plurality of generated pseudo-random numbers, and a second CPU computes the sum of a plurality of data encrypted using the plurality of encryption keys and decrypts a value of the sum using the aggregated value decryption key.

F I G. 1

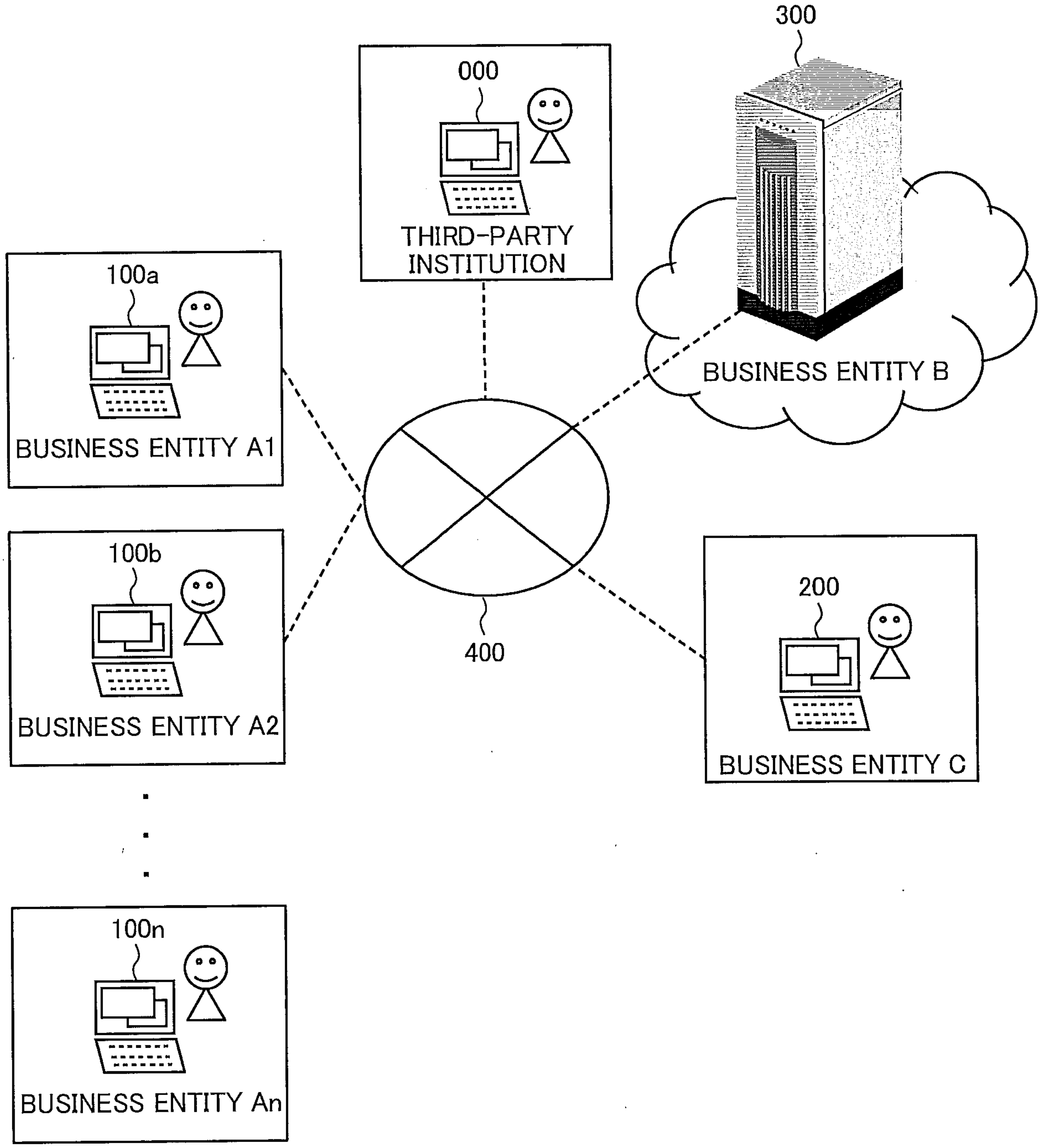
300
000
THIRD-PARTY INSTITUTION
100a
BUSINESS ENTITY A1
BUSINESS ENTITY B
100b
BUSINESS ENTITY A2
400
200
BUSINESS ENTITY C
100n
BUSINESS ENTITY An

FIG. 2A

| NAME | MEDICAL RECORD | AGE (YEARS OLD) | SEX | HOSPITALIZATION PERIOD (DAYS) | ... |
|---|---|---|---|---|---|
| A | PNEUMONIA | 29 | MALE | 20 | ... |
| B | PNEUMONIA | 39 | MALE | 7 | ... |
| C | PNEUMONIA | 40 | MALE | 13 | ... |
| D | PNEUMONIA | 51 | FEMALE | 3 | ... |
| E | PNEUMONIA | 46 | FEMALE | 6 | ... |

FIG. 2B

| NAME | MEDICAL RECORD | AGE (YEARS OLD) | SEX | HOSPITALIZATION PERIOD (DAYS) | ... |
|---|---|---|---|---|---|
| A | PNEUMONIA | Enc (29) | MALE | Enc (20) | ... |
| B | PNEUMONIA | Enc (39) | MALE | Enc (7) | ... |
| C | PNEUMONIA | Enc (40) | MALE | Enc (13) | ... |
| D | PNEUMONIA | Enc (51) | FEMALE | Enc (3) | ... |
| E | PNEUMONIA | Enc (46) | FEMALE | Enc (6) | ... |

FIG. 2C

| MEDICAL NAME | SEX | SUM OF AGES | SUM OF HOSPITALIZATION PERIODS (DAYS) |
|---|---|---|---|
| PNEUMONIA | MALE | 108 | 40 |

FIG. 2D

| MEDICAL NAME | SEX | AVERAGE AGE (YEARS OLD) | AVERAGE HOSPITALIZATION PERIOD (DAYS) |
|---|---|---|---|
| PNEUMONIA | MALE | 36.0 | 13.3 |

F I G. 3

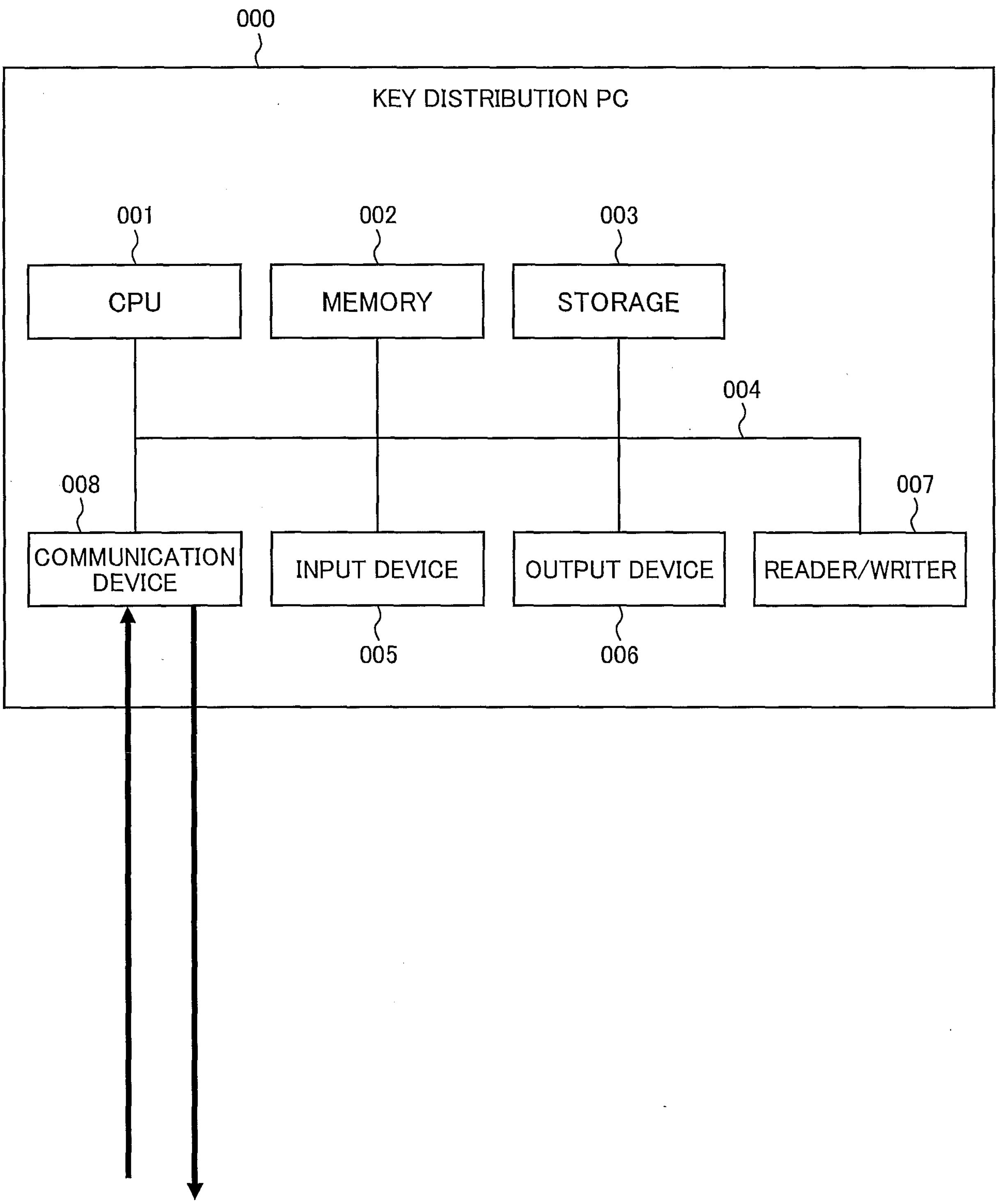
000
KEY DISTRIBUTION PC
001
002
003
CPU
MEMORY
STORAGE
004
008
007
COMMUNICATION DEVICE
INPUT DEVICE
OUTPUT DEVICE
READER/WRITER
005
006

F I G. 4

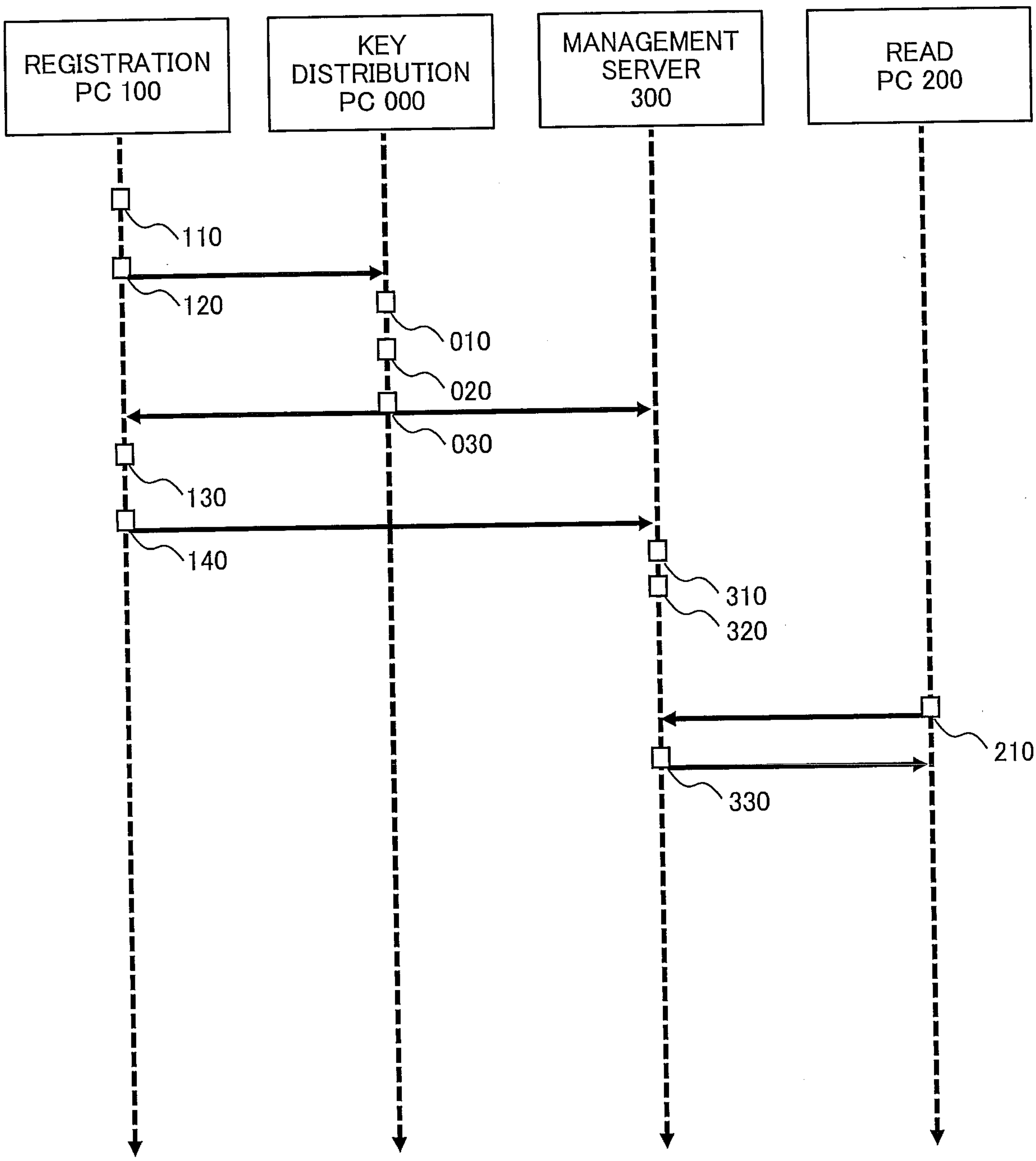
REGISTRATION PC 100
KEY DISTRIBUTION PC 000
MANAGEMENT SERVER 300
READ PC 200
110
120
010
020
030
130
140
310
320
210
330

FIG. 5

PARAMETER GENERATION PROCESS FLOW
FOR ENCRYPTION STATISTICAL COMPUTATION

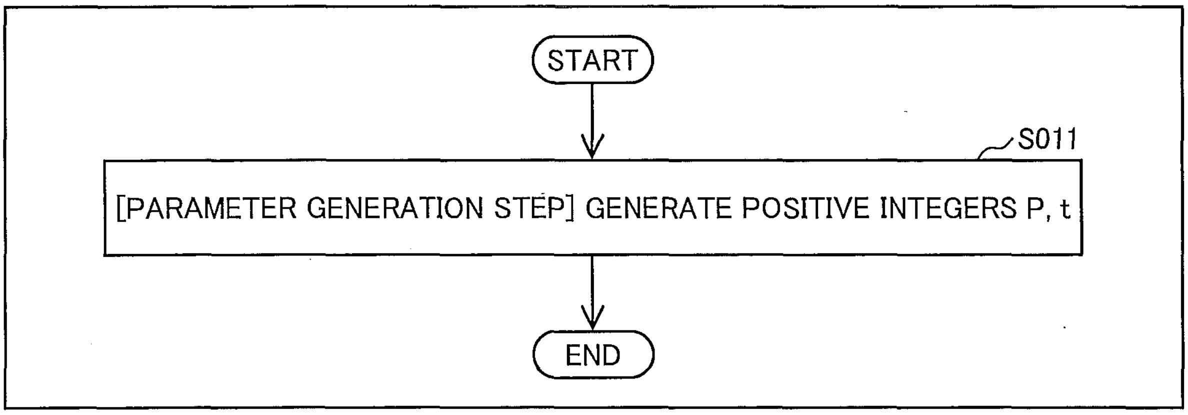


FIG. 6

ENCRYPTION KEY GENERATION PROCESS FLOW

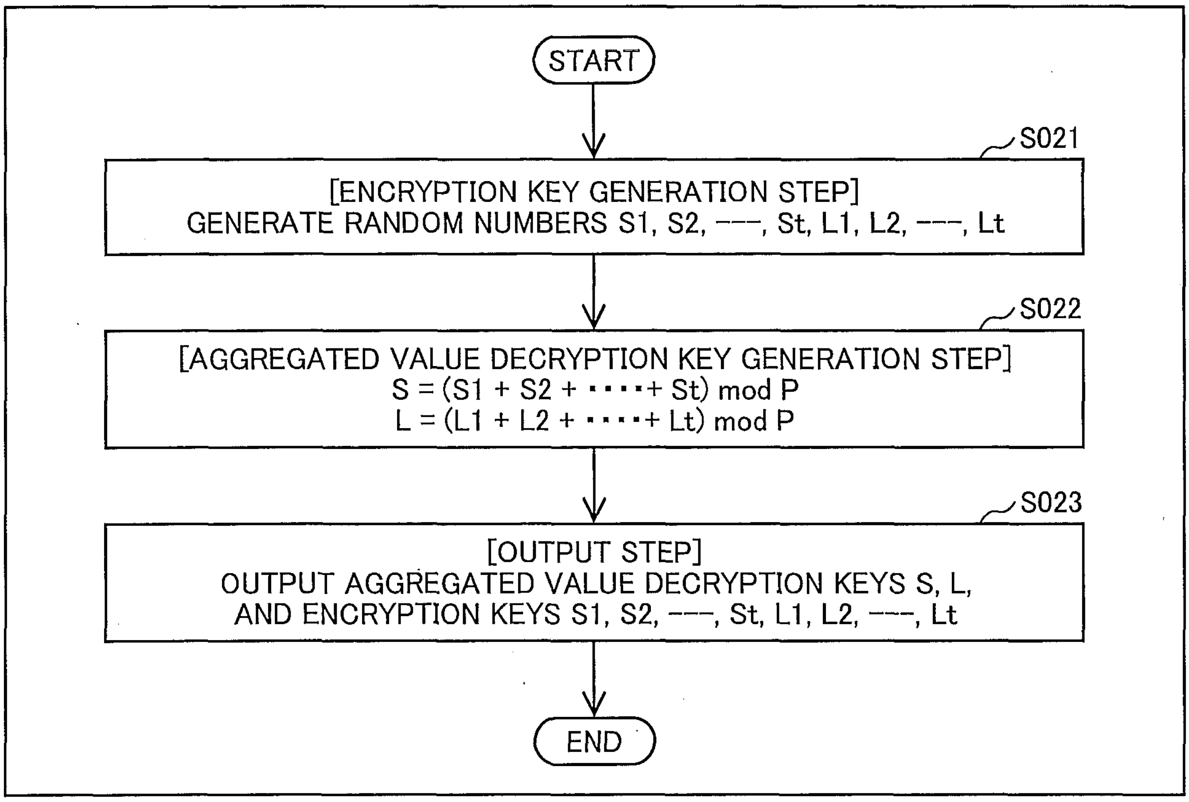

F I G. 7

KEY MANAGEMENT DB

F I G. 7 a

| TRANSMISSION DESTINATION | ENCRYPTION KEY FOR AVERAGE | ENCRYPTION KEY FOR VARIANCE |
|---|---|---|
| REGISTRATION PC100a | S1 | L1 |
| REGISTRATION PC100b | S2 | – |
| REGISTRATION PC100c | S3 | – |
| REGISTRATION PC100d | – | L2 |
| ... | ... | ... |
| ... | ... | ... |
| REGISTRATION PC100n | St | Lt |

F I G. 7 b

| TRANSMISSION | AGGREGATED VALUE DECRYPTION KEY FOR AVERAGE | SPECIFIC AGGREGATED VALUE DECRYPTION KEY FOR VARIANCE |
|---|---|---|
| MANAGEMENT SERVER 200 | S | L |

F I G. 8

PROCESS FLOW FOR CIPHER TEXT GENERATION

F I G. 8 a

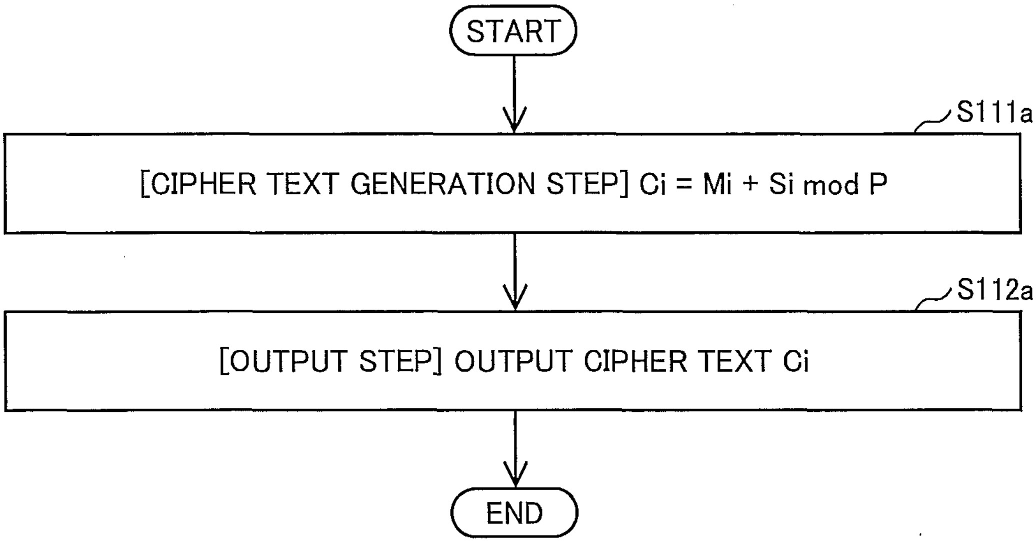


F I G. 8 b

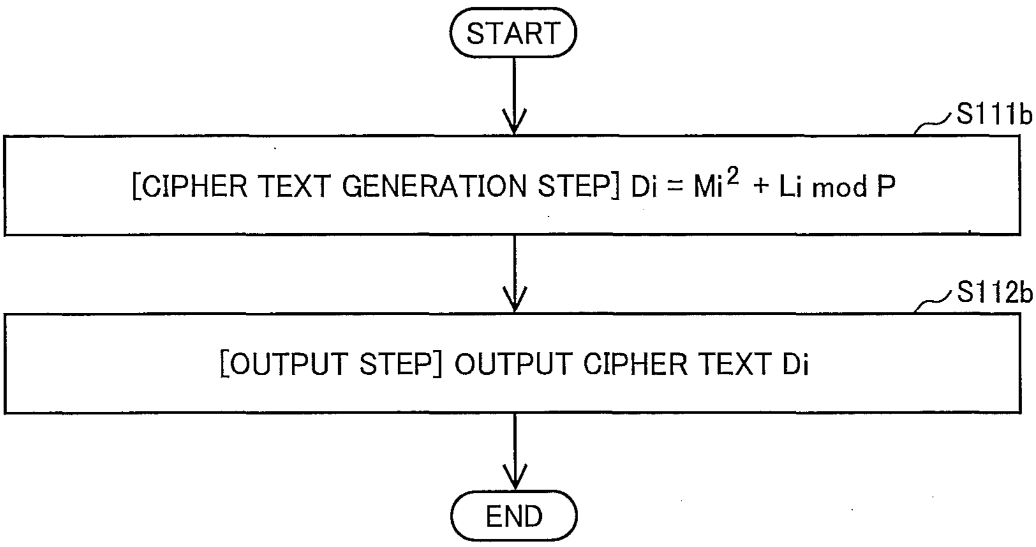

F I G. 9

ENCRYPTION STATISTICAL COMPUTATION PROCESS FLOW (a)

F I G. 9 a

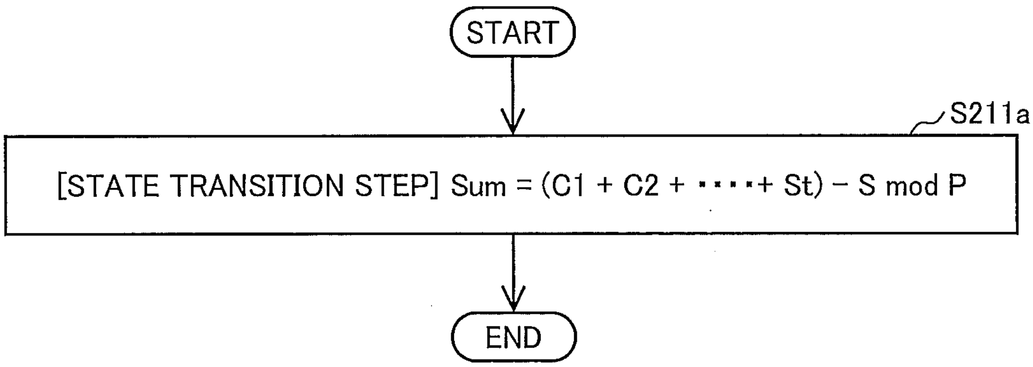


F I G. 9 b

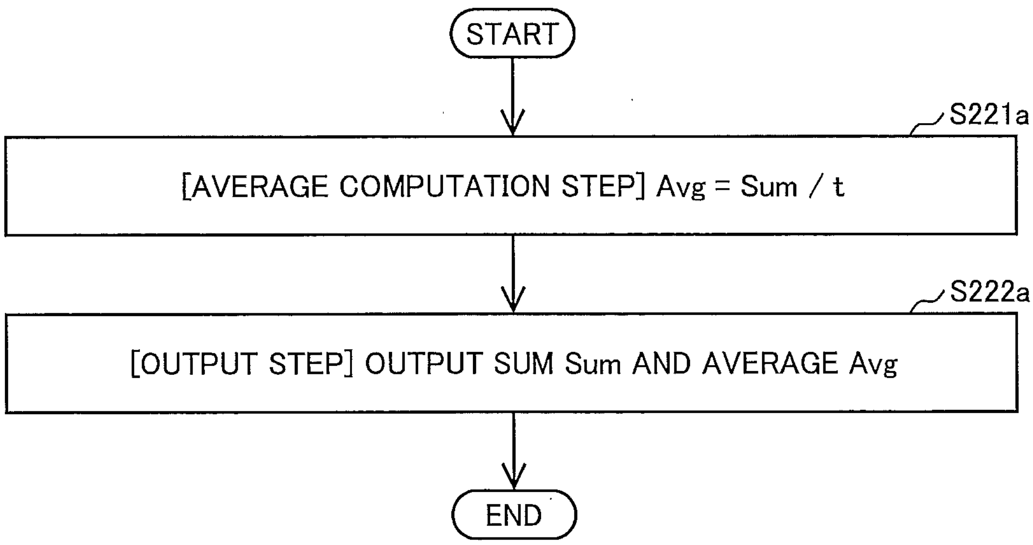

FIG. 10

ENCRYPTION STATISTICAL COMPUTATION PROCESS FLOW (b)

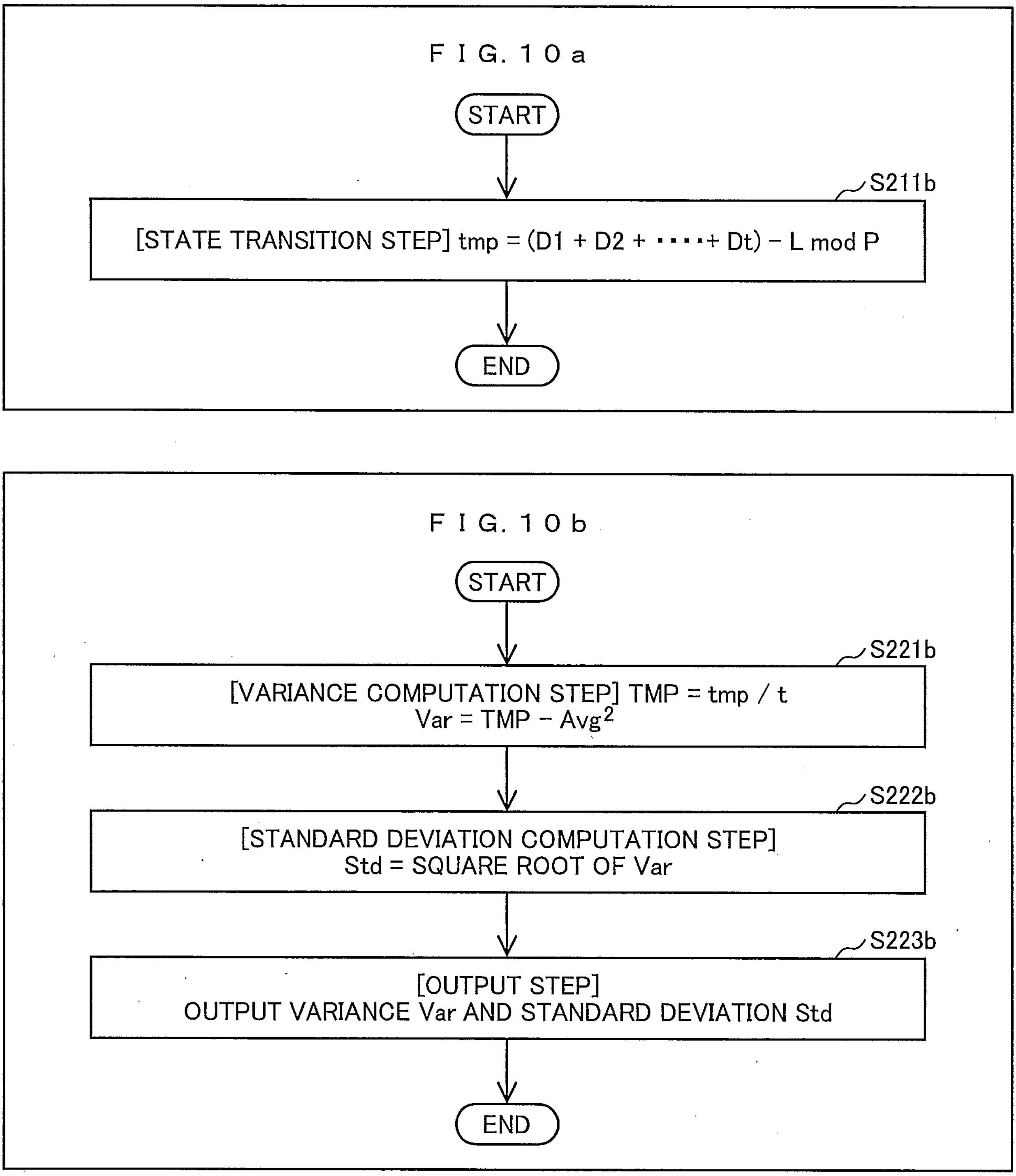

FIG. 11

PROCESS FLOW FOR CIPHER TEXT GENERATION

FIG. 11a

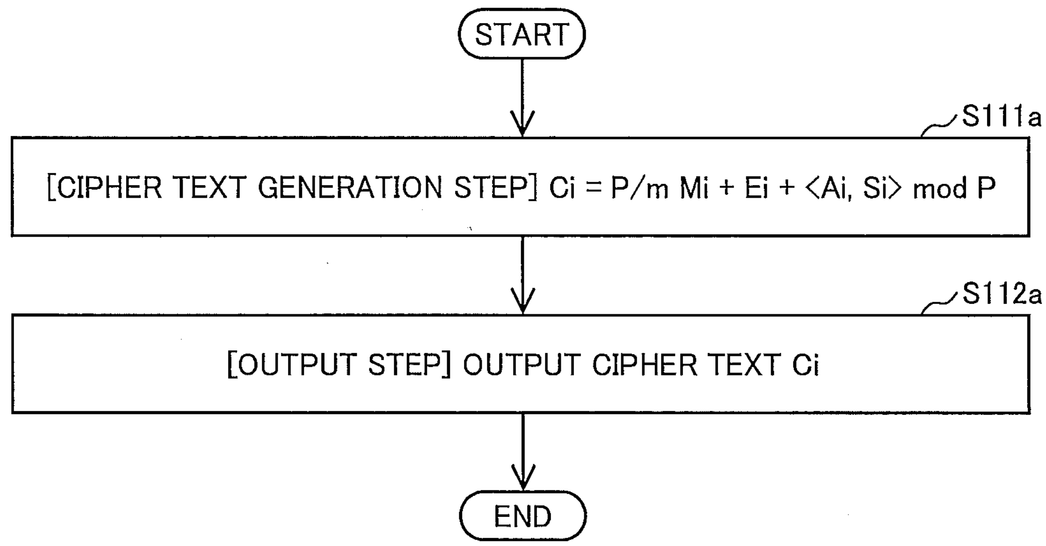


FIG. 11b

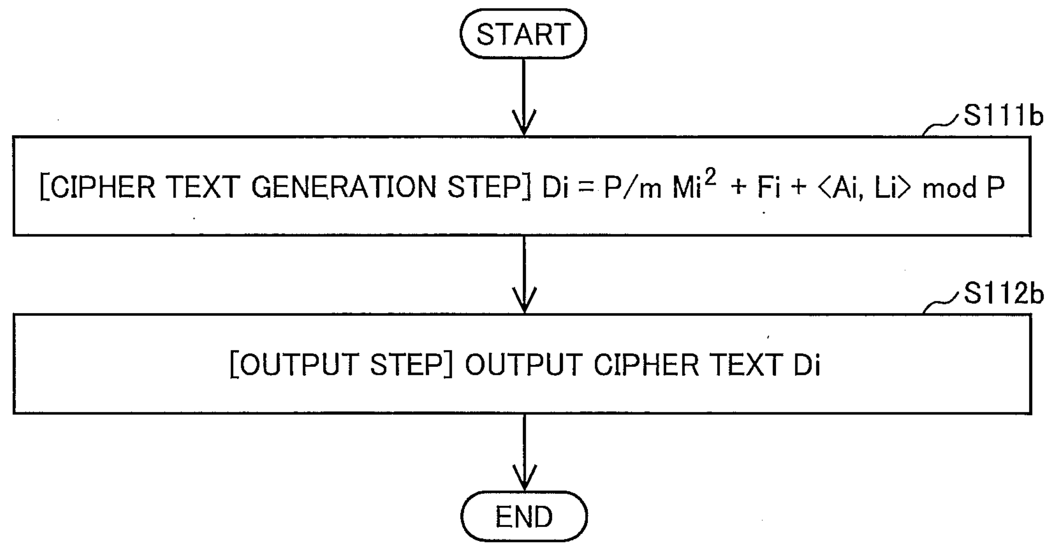

FIG. 12

ENCRYPTION STATISTICAL COMPUTATION PROCESS FLOW

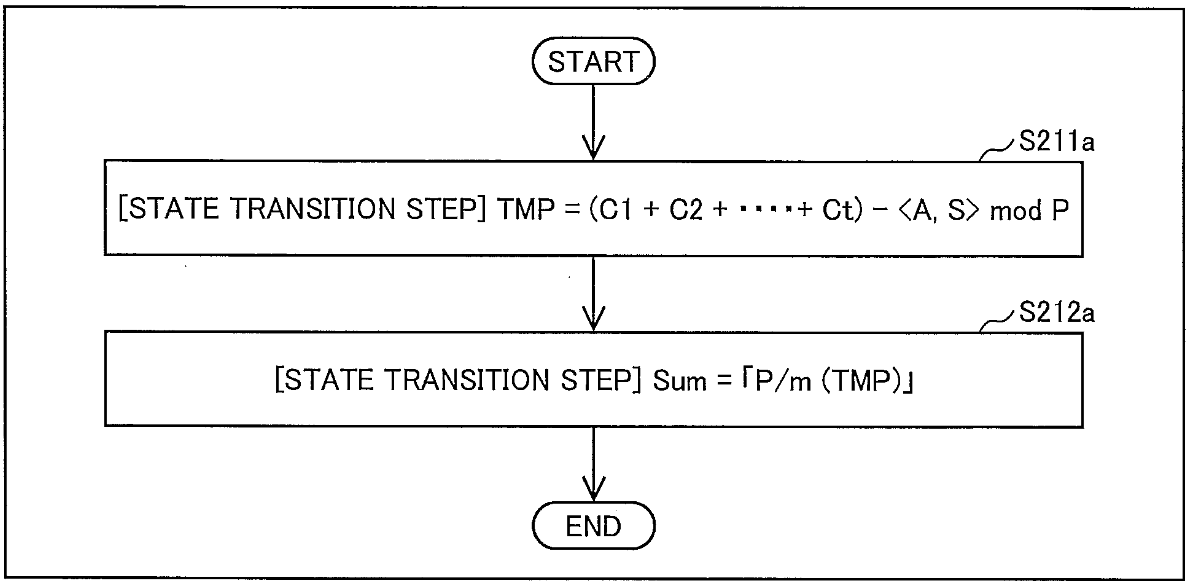


FIG. 13

ENCRYPTION STATISTICAL COMPUTATION PROCESS FLOW

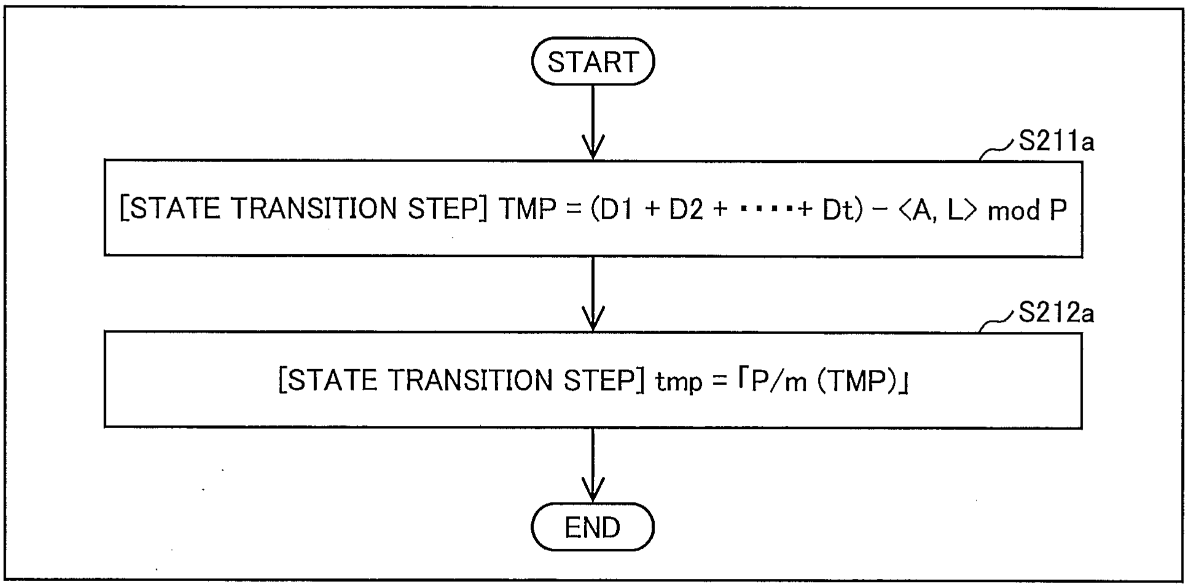

**INTERNATIONAL SEARCH REPORT**

International application No. PCT/JP2016/056322

A. CLASSIFICATION OF SUBJECT MATTER
*G09C1/00*(2006.01)i

According to International Patent Classification (IPC) or to both national classification and IPC

B. FIELDS SEARCHED

Minimum documentation searched (classification system followed by classification symbols)
G09C1/00

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2016 |
| Kokai Jitsuyo Shinan Koho | 1971-2016 | Toroku Jitsuyo Shinan Koho | 1994-2016 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| Y | JP 2012-165374 A (Palo Alto Research Center Inc.), 30 August 2012 (30.08.2012), paragraphs [0012] to [0013], [0016], [0023] to [0032] & US 2012/0204026 A1 & EP 2485430 A2 paragraphs [0028] to [0029], [0032], [0039] to [0048] & KR 10-2012-0090812 A | 1-6 |
| Y | CASTELLUCCIA, Claude, et al., Efficient Aggregation of encrypted data in Wireless Sensor Networks, In: The Second Annual International Conference on Mobile and Ubiquitous Systems: Networking and Services, 2005, pp. 109-117 | 1-6 |

☒ Further documents are listed in the continuation of Box C. ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 20 May 2016 (20.05.16) | 31 May 2016 (31.05.16) |

| Name and mailing address of the ISA/ | Authorized officer |
|---|---|
| Japan Patent Office<br>3-4-3,Kasumigaseki,Chiyoda-ku,<br>Tokyo 100-8915,Japan | Telephone No. |

Form PCT/ISA/210 (second sheet) (January 2015)

**INTERNATIONAL SEARCH REPORT**

International application No.
PCT/JP2016/056322

C (Continuation). DOCUMENTS CONSIDERED TO BE RELEVANT

| Category* | Citation of document, with indication, where appropriate, of the relevant passages | Relevant to claim No. |
|---|---|---|
| A | JP 2011-232727 A (Fuji Xerox Co., Ltd.), 17 November 2011 (17.11.2011), paragraph [0044]; fig. 1 & US 2011/0264920 A1 paragraph [0034]; fig. 1 | 1,3,5,6 |

Form PCT/ISA/210 (continuation of second sheet) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 5679018 B